# EUROPEAN PATENT APPLICATION

(11) **EP 0 552 378 A1**
(43) Date of publication of application: **28.07.1993**
(21) Application number: 92916821.9
(22) Date of filing: 10.08.1992
(51) Int. Cl.: H02K 1/12, H02K 5/15, H02K 7/14

(54) **STATOR/HOUSING ASSEMBLY OF AN ELECTRIC MOTOR**

(30) Priority: 08.08.1991 JP 199425/91
(71) Applicant: FANUC LTD., Minamitsuru-gun, Yamanashi 401-05 (JP)
(72) Inventor: NAKAMURA, Kosei Fanuc Mansion Harimomi 11-601, Minamitsurugun Yamanashi 401-05 (JP); KATSUZAWA, Yukio, Minamitsuru-gun Yamanashi 401-05 (JP); MASUYA, Michi Fanuc Dai-3 Vira-karamatsu, Minamitsuru-gun Yamanashi 401-05 (JP)
(74) Representative: Otte, Peter, Dipl.-Ing.
(86) International application number: JP9201020
(87) International publication number: WO9303533

(57) **Abstract**

A stator housing assembly of an electric motor comprises a cylindrical stator core (12) formed by laminating magnetic steel plates, an annular front flange (14) which is arranged at the front end in the axial direction of the motor and has a front surface (14a) that will be mounted on a machine that is to be driven, and an annular rear bracket (16) that is arranged at the rear end in the axial direction of the motor and holds the stator core (12) between itself and the front flange (14). On the front surface (14a) of the front flange (14) is formed an annular protrusion (28) that fits to the mounting opening on the machine side. In the rear surface (14b) of the front flange (14) are formed a plurality of threaded holes (30) to which will fit tie bolts (46) running in the axial direction. The threaded holes (30) are blind holes which do not reach the front surface (14a) of the front flange (14). The stator core (12) has a plurality of bolt penetration holes (36) extending in the axial direction at positions corresponding to the threaded holes (30) in the front flange (14). The rear bracket (16) has a plurality of bolt insertion holes (40) extending in the axial direction at positions corresponding to the bolt insertion holes (36) of the stator core (12). The plurality of tie bolts (46) are inserted in the bolt insertion holes (40), bolt penetration holes (36) and threaded holes (30) from the side of the rear bracket (16), and threaded portions (48) at the ends of tie bolts (46) are screwed into the threaded holes (30), so that the rear bracket (16), stator core (12) and front flange (14) are firmly coupled together as a unitary structure. A motor which uses the thus constituted stator/housing assembly (10) has no hole for bolt which is opened in the front surface (14a) of the front flange (14), and a machine oil is reliably prevented from infiltrating from the other machine.

## Description

### TECHNICAL FIELD

The present invention relates to a stator-housing assembly of an electric motor, and more particularly to an improvement of a stator-housing assembly of an electric motor constructed by holding a cylindrical laminated stator core between a front flange and a rear bracket both arranged as housings at axial front and rear ends of the motor, and fixing and integrally joining the laminated stator core, the front flange and the rear bracket by a plurality of tie-bolts.

### BACKGROUND ART

Conventionally, it is known that a stator arranged at the outer circumference of an electric motor is constituted as a stator-housing assembly which is formed by holding a cylindrical stator core, laminated with a plurality of annular magnetic steel plates, between housing members arranged at axial front and rear ends of the motor, and integrally joining the stator core and the housing members. To join the stator core and the housing members, the method has been used wherein the stator core is held between and welded to two annular end plates and the laminated construction of the stator core is welded together; the stator core held between the end plates is then disposed between a front flange and a rear bracket both arranged as housing members at axial front and rear ends of the motor, and each of the end plates is fixedly connected to the adjacent front flange and rear bracket by different tie-bolts from the front and rear of the motor, respectively. However, this method has a problem wherein a thermal deformation is generated on the inner surface of the stator core during the welding process.

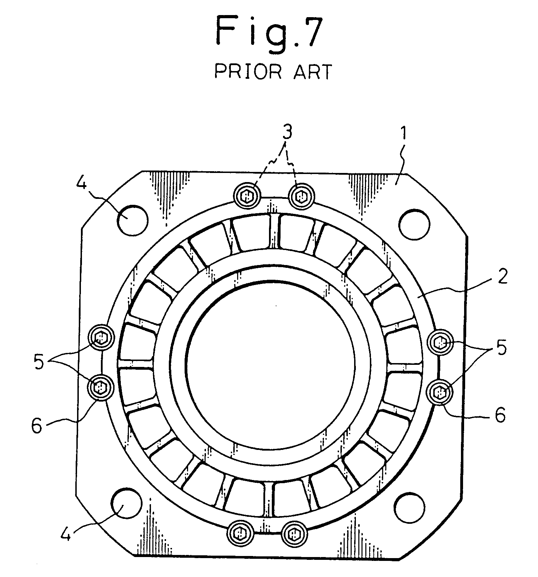

Also, a stator-housing assembly is known, which is formed by holding a laminated stator core between a front flange and a rear bracket arranged at axial front and rear ends of an electric motor, and integrally joining the stator core, the front flange and the rear bracket by a plurality of long tie-bolts continuously passing therethrough. This stator-housing assembly includes a cylindrical stator core formed by laminating a plurality of annular magnetic steel plates, an annular front flange arranged at the axial front end of the motor and a front face of which forms an end face fitted to a machine to be driven by the motor, and an annular rear bracket arranged at the axial rear end of the motor and holding the stator core with the front flange. The front face of the front flange is shown in Figure 7. As shown in the figure, an annular projection 2, fitted to a mount opening of the machine to be driven, is formed on the front face of the front flange 1. The front flange 1 is provided at a peripheral edge thereof with a plurality of axially extending bolt insertion holes 3 in a symmetrical manner. The front flange 1 is also provided at the four corners thereof with holes 4 for mounting to the machine to be driven. Though the figure does not show it, the stator core is provided with a plurality of axially extending bolt through holes at positions corresponding to the bolt insertion holes 3 of the front flange 1, and with axially extending cooling air vent holes at the four corners of the stator core. The rear bracket is provided with threaded holes at the position corresponding to the bolt through holes of the stator core. A plurality of tie-bolts 5 are inserted from the front flange 1 into the bolt insertion holes 3, the bolt through holes and the threaded holes, and threaded ends of the tie-bolts are screwed into the threaded holes, thereby the front flange 1, the stator core and the rear bracket are firmly and integrally joined to one another. Note, the bolt insertion holes 3 of the front flange 1 are formed in general as loose-fit holes with a larger diameter than the diameters of the tie-bolts 5 so as to allow the error of sizing caused in a molding process, thereby forming a clearance between the bolt insertion holes 3 and the tie-bolts 5.

In the stator-housing assembly described above, when the positions of the bolt through holes and the bolt insertion holes 3 of the front flange 1 are restricted due to reasons such as the provision of air vent holes in the stator core, spot facings 6 of the bolt insertion holes 3 partially overlap the annular projection 2 and thereby notches are inevitably formed in the annular projection 2 (see Fig. 7). Therefore, when the motor having this stator-housing assembly is mounted on the machine to be driven, machine oil scattered from the gear box, etc., of the machine may permeate into the motor interior from the notches formed in the annular projection of the front flange through the clearance between the bolt insertion holes and the tie-bolts, thereby affecting the performance of the motor. Conventionally, to prevent permeation of the machine oil, the method has been used wherein a sealing agent or the like is applied to the clearance between the bolt insertion holes and the tie-bolts. However, this method increases the number of steps for producing the motor. Alternatively, it is possible to make the diameter of the tie-bolts and bolt insertion holes smaller and keep the spot facings of the bolt insertion holes from overlapping the annular projection. However, since the front flange as a support portion of the motor is in contact with the machine to be driven and thus subjected to vibration, this method thereby affecting the strength of the joint between the front flange and the stator core.

### DISCLOSURE OF THE INVENTION

The object of the present invention is to provide a stator-housing assembly formed by integrally joining a stator core, a front flange and a rear bracket by tie-bolts continuously passing therethrough, that can prevent machine oil passing through the front flange without increasing the number of producing steps and decreasing the mechanical strength, and can improve the reliability of the motor.

To accomplish the above object, the present invention provides a stator-housing assembly of an electric motor fitted to a machine to be driven that fixedly supports a stator disposed on the outer circumference of the motor and rotatably supports a rotor disposed inside the stator, comprising a cylindrical stator core formed by laminating a plurality of magnetic steel plates, an inner circumference thereof having a plurality of slots in which coils are disposed, and surrounding the rotor with a clearance, and the stator core being provided with a plurality of bolt through holes close to an outer periphery thereof, the bolt through holes being formed so as to pass through in an axial direction at symmetrical positions about an axis; a front flange arranged at a front end of the motor and rotatably supporting the rotor, a front face thereof forming an end face fitted to the machine to be driven and a rear face thereof being brought into contact with one axial end face of the stator core, and the front flange being provided with a plurality of threaded holes at positions matching the bolt through holes of the stator core, the threaded holes being formed as blind holes and indented in an axial direction from the rear face; a rear bracket arranged at a rear end of the motor and rotatably supporting the rotor, the rear bracket being brought into contact with another axial end face of the stator core so as to hold the stator core with the front flange, and being provided with a plurality of bolt insertion holes at positions matching the bolt through holes of the stator core, the bolt insertion holes being formed so as to pass through in an axial direction; and a plurality of tie-bolts inserted in the bolt insertion holes of the rear bracket, passing through the bolt through holes of the stator core and screwed into the threaded holes of the front flange, the tie-bolts fixedly joining the rear bracket, the stator core and the front flange together.

The bolt through holes of the stator core may be arranged close to the outer periphery of the stator core at substantially equal intervals in a circumferential direction. It is preferable that at least two of the bolt insertion holes of the rear bracket have diameters substantially equal to diameters of the tie-bolts, and the remaining bolt insertion holes have diameters larger than the diameters of the tie-bolts.

In the stator-housing assembly according to the present invention, the tie-bolts are inserted from the side of the rear bracket and screwed and bound to the threaded holes of the front flange, thereby fixedly joining the laminated stator core between the rear bracket and the front flange. At this time, the threaded holes do not open at the front face of the front flange, so that permeation of machine oil from the machine to be driven is prevented. Therefore, there is no need to make the diameters of the tie-bolts smaller and a stator-housing assembly with sufficient fixing strength can be obtained. Further, when the bolt through holes of the stator core are arranged at substantially equal intervals, the binding force by the tie-bolts acts evenly, so that the fixing strength of the stator-housing assembly as a whole can be further increased. Furthermore, when at least two of the bolt insertion holes of the rear bracket are formed tightly, the stator-housing assembly can be easily assembled in consideration of the molding error, and shifting of the rear bracket when external force is applied can be prevented.

### BRIEF DESCRIPTION OF THE DRAWINGS

The foregoing and other objects, features, and advantages of the present invention will be described with relation to the embodiments shown in the accompanying drawings, in which;
Fig. 1 is a front view of a stator-housing assembly according to an embodiment of the present invention;
Fig. 2 is a sectional view of the stator-housing assembly along with line II-II of Figs. 1 and 3;
Fig. 3 is a sectional view of a stator core along with line III-III of Fig. 2;
Fig. 4 is a rear view of a front flange shown from line IV-IV of Fig. 2;
Fig. 5 is a front view of a rear bracket shown from line V-V of Fig. 2;
Fig. 6 is a perspective view of an electric motor having the stator-housing assembly of Fig. 1; and
Fig. 7 is a front view of a conventional stator-housing assembly.

### BEST MODE OF CARRYING OUT THE INVENTION

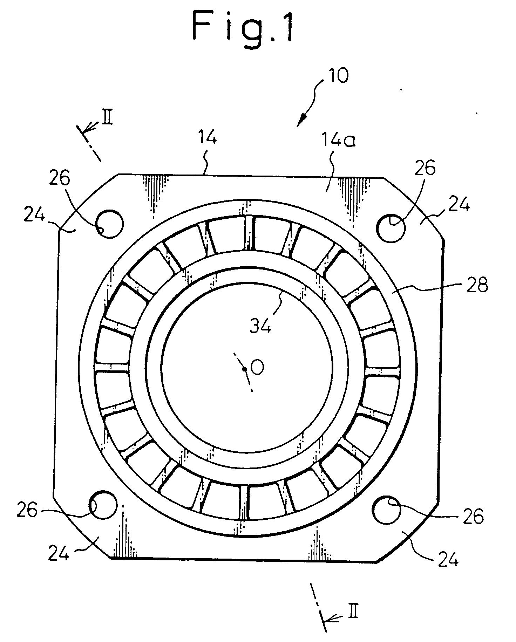

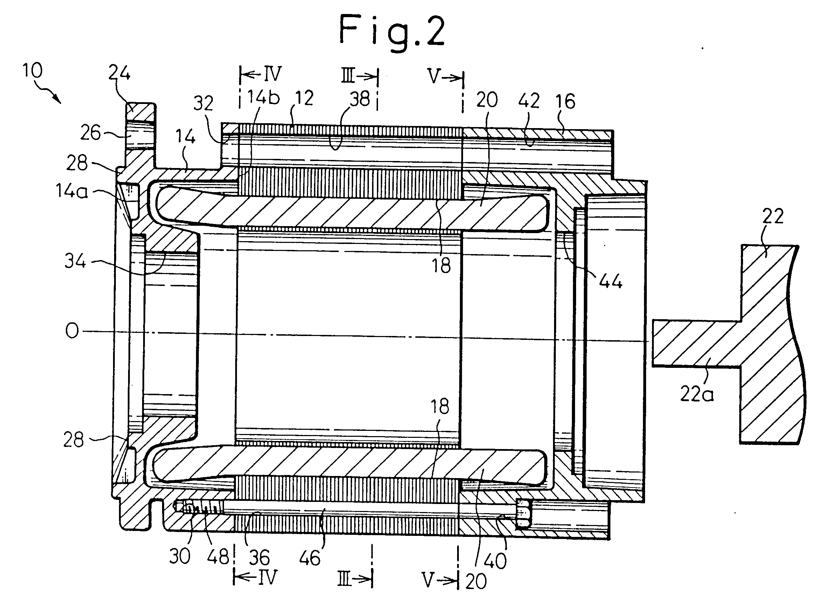

Referring to Figs. 1 and 2, a stator-housing assembly 10 of an electric motor, according to an embodiment of the present invention, includes a cylindrical stator core 12 formed by laminating a plurality of annular magnetic steel plates, an annular front flange 14 arranged at an axial front end of the motor and a front face 14a of which forms an end face fitted to a machine to be driven, and an annular rear bracket 16 arranged at an axial rear end of the motor and holding the stator core 12 with the front flange 14.

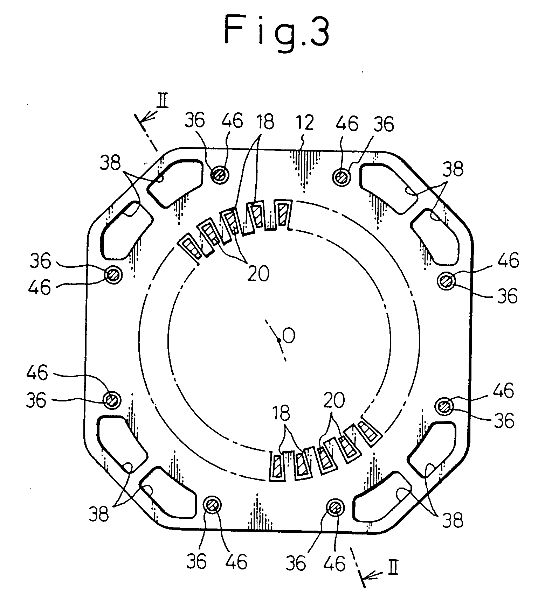

As shown in Figs. 2 and 3, the stator core 12 has a plurality of slots 18 on the inner circumference thereof, and a stator coil 20 is disposed in each of the slots 18. A rotor 22 of the motor, partly shown in Fig. 2, is arranged with a clearance from the inner circumference of the stator core 12 and rotatably supported by bearings (not shown) in the front flange 14 and the rear bracket 16.

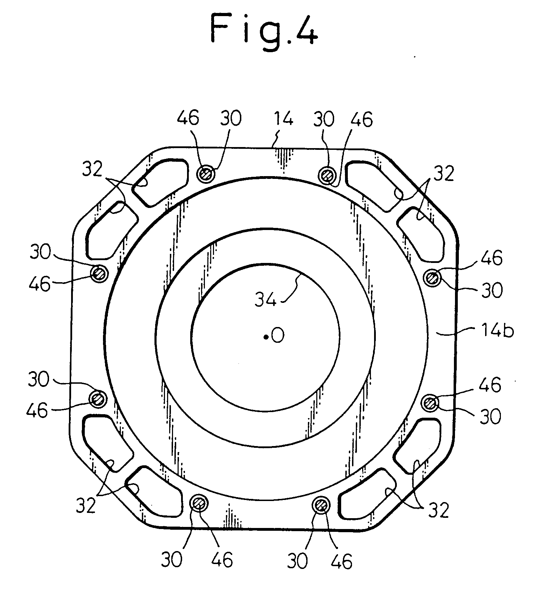

Referring again to Figs. 1 and 2, the front flange 14 is provided at the four corners of the front face 14a thereof with flanged portions 24 for mounting the motor to the machine to be driven (not shown), and a mounting hole 26 is formed in each of the flanged portions 24. The front face 14a of the front flange 14 is provided with an annular projection 28 fitted within a mount opening of the machine. As shown in Fig. 4, a plurality (eight, in this embodiment) of threaded holes 30 engaged with tie-bolts mentioned below are formed in an axially indented manner at substantially equal intervals close to the outer periphery of the rear face 14b of the front flange 14. The threaded holes 30 are blind holes and do not penetrate to the front face 14a of the front flange 14 (see Fig. 2). Further, air vents 32 for cooling the stator are formed in the four corners of the rear face 14b. Furthermore, an opening 34, through which a shaft 22a of the rotor 22 passes, is formed at the center of the front flange 14, and a bearing (not shown) is disposed in the opening 34.

As shown in Figs. 2 and 3, the stator core 12 is provided with bolt through holes 36 extending in an axial direction of the motor at a position corresponding to the threaded holes 30 of the front flange 14. The stator core 12 is also provided with air vent holes 38 axially passing through the four corners thereof so as to be connected to the air vents 32 of the front flange 14.

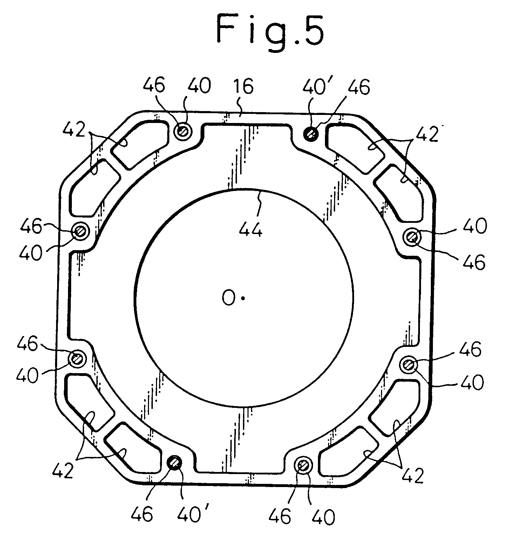

As shown in Figs. 2 and 5, the rear bracket 16 is provided with bolt insertion holes 40 extending in an axial direction of the motor at a position corresponding to the bolt through holes 36 of the stator core 12. The rear bracket 16 is also provided with air vent holes 42 at the four corners thereof so as to be connected to the air vent holes 38 of the stator core 12. Further, an opening 44, through which the shaft 22a of the rotor 22 passes, is formed at the center of the rear bracket 16, and a rear bearing (not shown) is disposed in the opening 44.

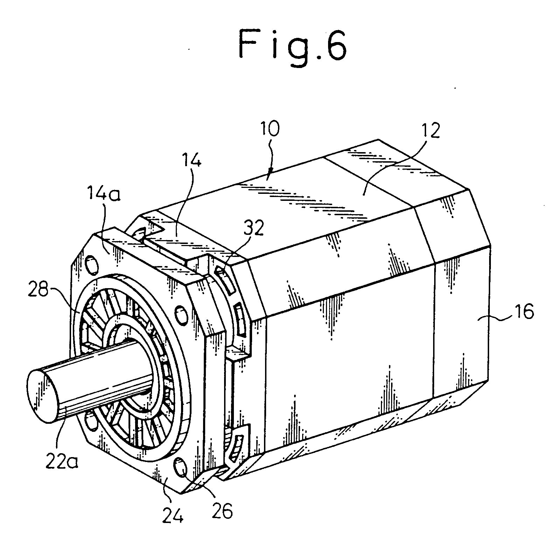

In this way, the threaded holes 30, the bolt through holes 36 and the bolt insertion holes 40 are aligned in the axial direction (see Fig. 2). A plurality (eight, in this embodiment) of tie-bolts 46 are inserted continuously into these bolt insertion holes 40, bolt through holes 36 and threaded holes 30 from the side of the rear bracket 16, and threaded ends 48 of the tie-bolts 46 are screwed into the threaded holes 30, so that the rear bracket 16, the stator core 12 and the front flange 14 are fixedly and integrally joined to one another. The motor using the stator-housing assembly 10 constructed in such a manner has no opening for the tie-bolts on the front face 14a of the front flange 14, as shown in Fig. 6, thereby preventing the permeation of machine oil from the machine to be driven.

In the above embodiment, the bolt insertion holes 40, the bolt through holes 36 and the threaded holes 30 are arranged close to the outer periphery of the rear bracket 16, the stator core 12 and the front flange 14, respectively, on a concentric circle about an axis O of the motor at substantially equal intervals (see Figs. 3 to 5). Therefore, the tie-bolts 46 are also arranged along the periphery of the stator-housing assembly on the concentric circle about the axis O at substantially equal intervals. Such an arrangement of the tie-bolts 46 provides a wholly uniform force for fixing the front flange 14, the stator core 12 and the rear bracket 16, and increases the fixing strength of, particularly, the front flange 14. Therefore, the stator-housing assembly 10 of the present invention can obtain a fixing strength of the front flange 14 not less than that in the conventional construction wherein the tie-bolts are inserted from the front flange, thus ensuring the reliability of the motor, although the tie-bolts 46 of the assembly 10 are inserted from the rear bracket 16 so as to join the front flange 12. In this respect, by increasing the number of bolt through holes 36 in the portion having no air vent holes 38 in the stator core 12, the number of bolt insertion holes 40 and threaded holes 30 accordingly, and thus the number of tie-bolts 46, the fixing strength of the stator-housing assembly as a whole can be strengthened.

In the bolt insertion holes 40 formed in the rear bracket 16 of the above embodiment, as shown in Fig. 5, two of the holes positioned symmetrically about an axis O among eight arranged on a concentric circle are formed as close fitted holes, each having a diameter substantially equal to that of the tie-bolt 46, and the remaining six holes are formed as loose fitted holes, each having a given clearance from the tie-bolt 46 as usual. Thus, when the stator-housing assembly 10 is exposed to shock from the outside thereof, shifting between the stator core 12 and the rear bracket 16 is prevented, and the fixing strength of the stator-housing assembly 10 as a whole is further enhanced. The arrangement of the bolt insertion holes 40' (close fitted holes) need not be positioned symmetrically about an axis O as illustrated, but preferably at least two or at most three holes 40' are included, so as to allow for the sizing error occurring in the molding process.

As described above, a stator-housing assembly of an electric motor, according to the present invention, has a construction wherein tie-bolts are inserted from a rear bracket and are engaged with blind threaded holes having a front flange, so that a stator core, the rear bracket and the front flange are integrally connected. Thus, the stator core having a laminated construction is firmly fixed between the rear bracket and the front flange, and any clearance through which machine oil of the machine to be driven permeates is eliminated on the front face of the front flange. Therefore, the reliability of the motor is improved and the life of the motor is further increased.

### LIST OF REFERENCE NUMERALS

- 10: stator-housing assembly
- 12: stator core
- 14: front flange
- 16: rear bracket
- 18: slot
- 20: coil
- 22: rotor
- 24: flanged portion
- 26: mounting hole
- 28: annular projection
- 30: threaded hole
- 32: air vent
- 34, 44: opening
- 36: bolt through hole
- 38, 42: air vent hole
- 40: bolt insertion hole
- 46: tie-bolt

## Claims

1. A stator-housing assembly of an electric motor fitted to a machine to be driven, which fixedly supports a stator disposed on the outer circumference of the motor and rotatably supports a rotor disposed inside the stator, comprising:
a cylindrical stator core formed by laminating a plurality of magnetic steel plates, an inner circumference thereof having a plurality of slots in which coils are disposed, and surrounding said rotor with a clearance; said stator core being provided with a plurality of bolt through holes close to an outer periphery thereof; said bolt through holes being formed so as to pass through in an axial direction at symmetrical positions about an axis;
a front flange arranged at a front end of the motor and rotatably supporting said rotor; a front face thereof forming an end face fitted to the machine to be driven and a rear face thereof being brought into contact with one axial end face of said stator core, and said front flange being provided with a plurality of threaded holes at positions matching said bolt through holes of said stator core; the threaded holes being formed as blind holes and indented in an axial direction from said rear face;
a rear bracket arranged at a rear end of the motor and rotatably supporting said rotor; said rear bracket being brought into contact with another axial end face of said stator core so as to hold said stator core with said front flange, and being provided with a plurality of bolt insertion holes at positions matching said bolt through holes of said stator core; the bolt insertion holes being formed so as to pass through in an axial direction; and
a plurality of tie-bolts inserted in said bolt insertion holes of said rear bracket, passing through said bolt through holes of said stator core and screwed into said threaded holes of said front flange; said tie-bolts fixedly joining said rear bracket, said stator core and said front flange together.

2. A stator-housing assembly as claimed in claim 1, wherein said bolt through holes of said stator core are arranged close to the outer periphery of said stator core at substantially equal intervals in a circumferential direction.

3. A stator-housing assembly as claimed in claim 1, wherein at least two of said bolt insertion holes of said rear bracket have diameters substantially equal to diameters of said tie-bolts, and the remaining bolt insertion holes have diameters larger than the diameters of said tie-bolts.
